# EUROPEAN PATENT APPLICATION

(11) **EP 1 530 367 A1**
(43) Date of publication of application: **11.05.2005**
(21) Application number: 03741324.2
(22) Date of filing: 10.07.2003
(51) Int. Cl.: H04N 5/235, H04N 5/225, H04N 5/33, H04N 5/335

(54) **IMAGE PICKUP SYSTEM**

(30) Priority: 11.07.2002 JP 2002202569
(71) Applicant: NILES CO., LTD., Tokyo 143-8521 (JP)
(72) Inventor: KAWAMURA, Hiroyuki, Tokyo 143-8521 (JP); HOSHINO, Hironori, Tokyo 143-8521 (JP); FUKUDA, Takeshi, Tokyo 143-8521 (JP)
(74) Representative: Luderschmidt, Schüler & Partner GbR
(86) International application number: PCT/JP2003/008778
(87) International publication number: WO 2004/008743

(57) **Abstract**

The imaging means comprises an IR lamp to radiate an infrared light forward, a CCD camera to image forward and convert to electrical signals and an image processing unit to change the signal storage time duration of the CCD camera at a predetermined period and sequentially and periodically output images with the different light exposure. The image processing unit extends the images with the different light exposure in the longitudinal direction and averages the signal level of both images after extending to form a composite image.

## Description

### TECHNICAL FIELD

The present invention relates to an imaging system using a CCD camera and others.

### BACKGROUND TECHNOLOGY

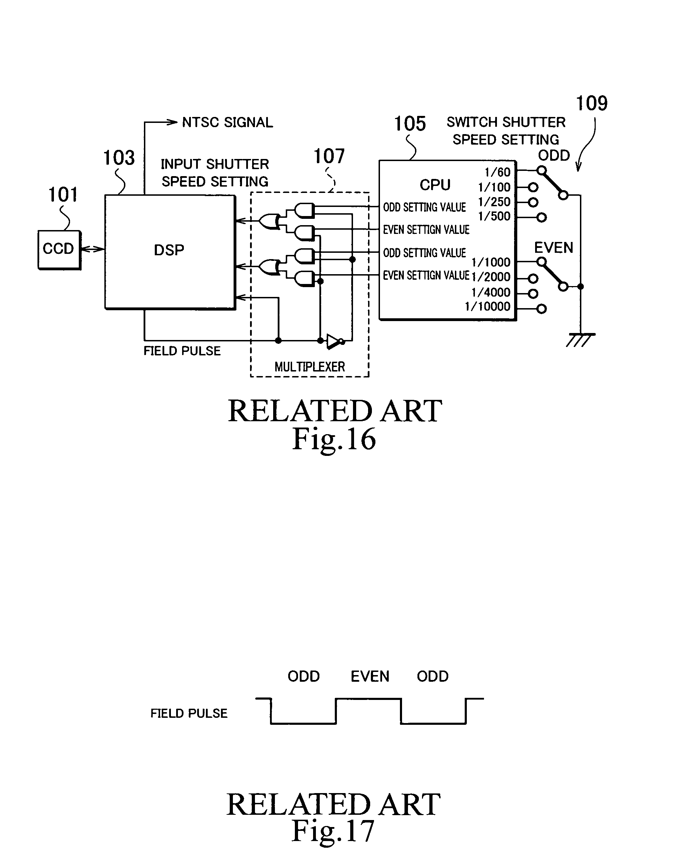

Fig.16 is an example of the conventional imaging system. The imaging system of Fig.16 is provided with a CCD camera 101 as imaging means, and a DSP (Digital Signal Processor) 103 and a CPU 105 as image processing units.

The CPU 105 and the DSP 103 are connected with each other through a multiplexer 107. Signals from a shutter speed setting switch 109 are inputted into the CPU 105. The shutter speed setting switch 109 can set a shutter speed for the ODD field (odd number of field) and a shutter speed for the EVEN field (even number of field), respectively.

That is to say, the CPU 105 reads the setting state of the shutter speed setting switch 109, encodes the shutter speed setting value for each field and outputs the encoded value. A field pulse signal as Fig. 17 is outputted from the DPS 103. If the outputted signal is high, an output of the EVEN shutter speed setting value is inputted into a shutter speed setting input terminal of the DSP 103 through the multiplexer 107, alternatively if the outputted signal is low, an output of the ODD shutter speed setting value is inputted into the shutter speed setting input terminal of the DSP 103 through the multiplexer 107. Therefore, the different shutter speed for each field can be set by the imaging system as Fig.16.

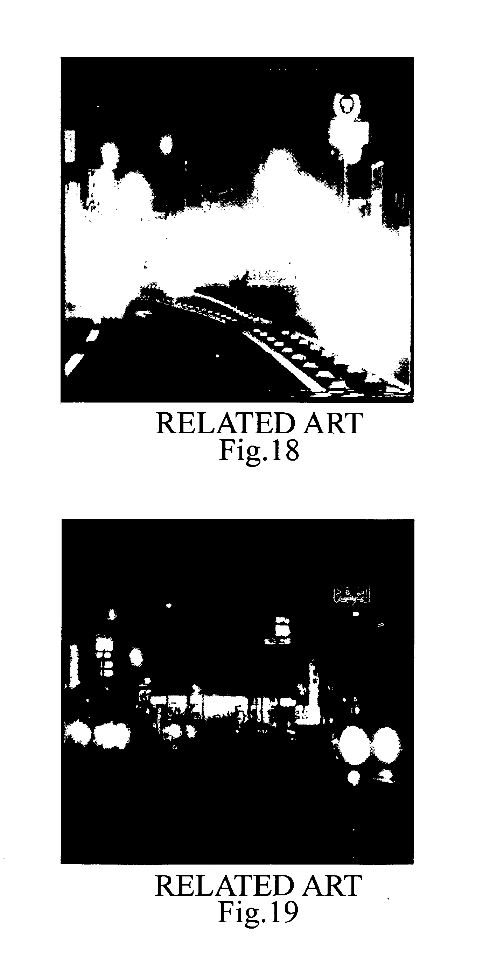

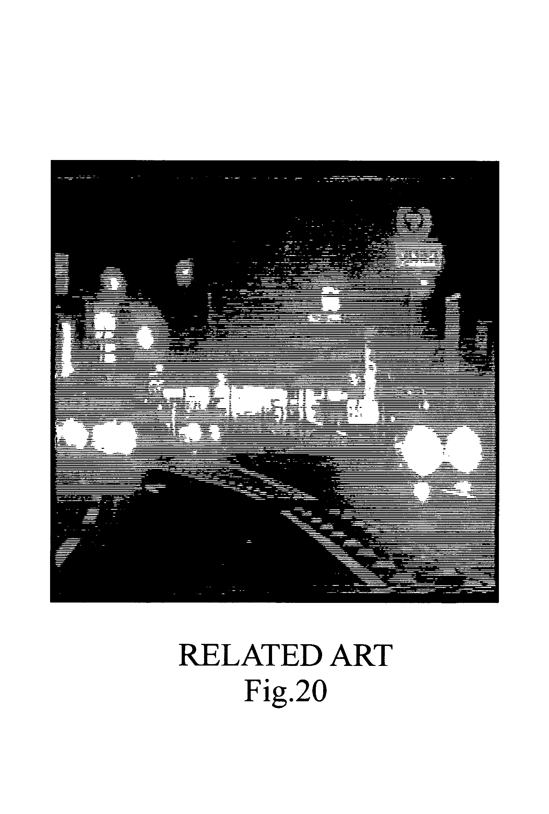

Generally in the case of a photographing by the CCD camera is performed, when the shutter speed is the automatic speed that the shutter speed is same between the ODD field and the EVEN field, a blooming (halation) is generated under the condition such that a bright light source exists in the dark background as Fig.18, thereby the surrounding area of the light source can not be viewed. Fig.18 is an image taken during the automobile is driven at night. Where an IR lamp as infrared light irradiating means radiates an infrared light forward and the in-vehicle CCD camera images forward in the running direction. The surrounding area of the bright light source such as the head lamp of the oncoming car and the illumination of the gas station can not be viewed by blooming. The cause is that the automatic speed is controlled to output the darkness of the whole image plane on an average. If the shutter speed is set to high, the blooming (halation) may be prevented, however the background can not be viewed at all as Fig.19.

Meanwhile the control of Fig.16 that the shutter speed is changed for each field is so-called double exposure control. In this control, the different shutter speed is set for each field. Thereby a bright image and a dark image are alternately outputted so that the invisible part caused by the darkness can be appeared in the bright image (where, ODD field), alternatively the invisible part caused by the blooming (halation) can be appeared in the dark image (where, EVEN field).

Then each field image is alternately outputted so that the sharp image as Fig.20 can be displayed on a monitor.

However, in the above described simple double exposure, one field is a bright image and other field is a dark image, and the bright image and the dark image are alternately displayed so that it causes a flicker on the monitor.

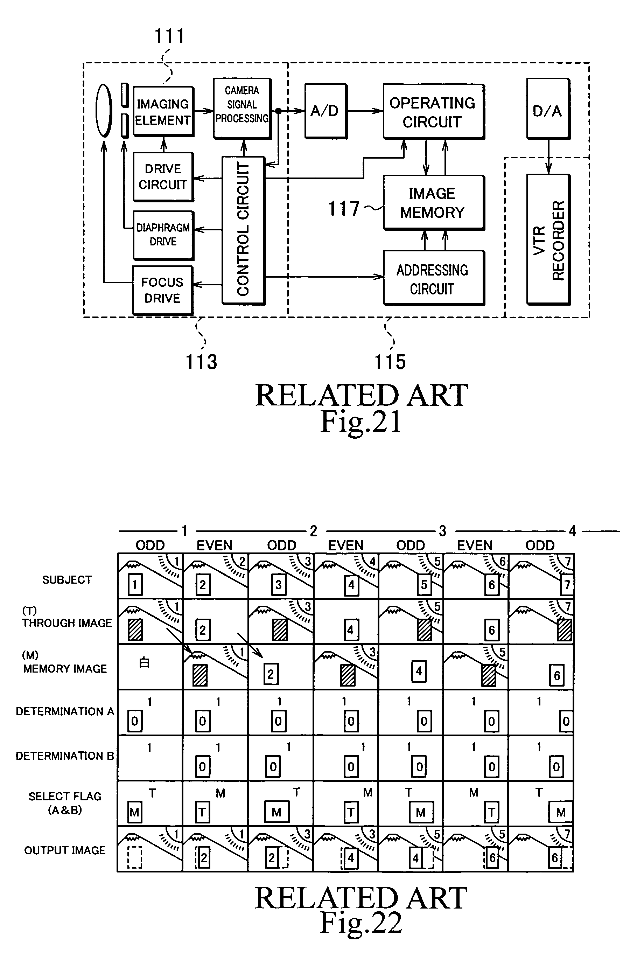

To solve the above described problem, there is an imaging device as Fig.21, which is described in Japanese Patent Unexamined Publication No.7-97841. The imaging device comprises a camera 113 with an imaging element 111 and a processing unit 115.

Fig.22 is a conceptual diagram of the imaging process by the imaging device of Fig.21. In the figure, "through image" indicates the direct output from the imaging element 111 of the camera 113, and "memory image" indicates the signals of the just before field stored once in an image memory 117.

In the through image, the main subject at emitting is black out per ODD field set to a high shutter speed, alternatively the background is white out per EVEN field set to a low speed. Since the memory image is composed of the signals delayed by one field period, the white out and the black out are generated in the different fields from the through image. Accordingly, the through image and the memory image are appropriately combined so that the output image of the lower most row in Fig.22 can be obtained.

However the combination of the through image and the memory image is patched-together image composed of the images with different light exposure because it is formed by overlapping the images partially selected from through image and the memory image. Therefore the flicker in the whole image plane as the simple double exposure control is eliminated, however the boundary between the through image and the memory image appears artificial.

### DISCLOSURE OF INVENTION

An object of the present invention is to provide an imaging system being capable of outputting the image having the improved image quality.

The object of the present invention is achieved by the following: The imaging system comprises infrared light irradiating means for irradiating an infrared light, imaging means for imaging the position irradiated the infrared light by the infrared light irradiating means and converting the images into an electrical signal, an image processor for changing the signal storage time duration of the imaging means at the predetermined period and sequentially and periodically outputting images with the different light exposure; and wherein the image processor extends the images with the different light exposure in the longitudinal direction and averages the signal level of both images after extending to form a composite image.

Thus, the infrared light is provided by the infrared light irradiating means. The imaging means images the position irradiated the infrared light by the infrared irradiating means and coverts the images into an electrical signal. The image processor changes the signal storage time duration of the imaging means at the predetermined period and sequentially and periodically outputs the images with the different light exposure.

The image processor extends the images with the different light exposure in the longitudinal direction and averages the signal level of both images after extending to form a composite image.

Therefore a boundary and a flicker caused by the different light exposure on the output image can be eliminated while both of the invisible part caused by the darkness in the bright image and the invisible part caused by the blooming (halation) in the dark image can be appear with the double exposure control so that an enhanced sharp image can be outputted.

In the imaging system of the present invention, the image processor extends the image by inserting the average value of the signal level of the adjacent pixels in the longitudinal direction therebetween.

Accordingly, since the image processor extends the image by inserting the average value of the signal level of the adjacent pixels in the longitudinal direction into therebetween, the image appropriately can be extended and an enhanced sharp image can be outputted.

In the imaging system of the present invention, the image processor previously sets a desired value of the light exposure and controls the signal storage time duration according to the desired value.

Thus, the image processor previously sets a desired value of the light exposure thereby can control the signal storage time duration according to the desired value. Thereby the dark area can be appeared brighter and the blooming (halation) can be prevented by blocking a strong incident light so that an enhanced sharp image can be outputted.

In the imaging system of the present invention, the image processor accumulates electrical signals of the imaging means and controls the signal storage time duration by comparing the accumulated electrical signals with a reference value previously set according to the desired value.

Thus the image processor can accumulate electrical signals of the imaging means and control the signal storage time duration by comparing the accumulated electrical signals with the reference value previously set according to the desired value. Therefore the signal storage time duration can be more accurately controlled so that an enhanced sharp image can be outputted.

In the imaging system of the present invention, the image processor controls the signal storage time duration by comparing the number of pixels of which the electrical signal is larger than a reference value in the imaging means with the number of reference pixels previously set according to the desired value.

Thus the image processor can control the signal storage time duration by comparing the number of pixels of which the electrical signal is larger than a reference value in the imaging means with the number of reference pixels previously set according to the desired value. Therefore the signal storage time duration can be more accurately controlled so that an enhanced sharp image can be outputted.

In the imaging system of the present invention, the infrared light irradiating means, the imaging means and the image processor are provided in an automobile. The infrared light irradiating means radiates the infrared light outside the automobile. The imaging means images outside the automobile.

Thus the infrared light irradiating means, the imaging means and the image processor are provided in an automobile thereby the infrared light irradiating means can radiate the infrared light outside the automobile, and the imaging means can image outside the automobile. Therefore the dark part appears brightly and sharply while the blooming (halation) caused by such as an illumination of the head lamp of an oncoming car is prevented so that the outside of the automobile can be confirmed by the sharp image output.

### BRIEF DESCRIPTION OF THE DRAWINGS

Fig.1 is a side view schematically showing the automobile according to the first embodiment of the present invention;
Fig.2 is a block diagram showing the imaging means and the image processing unit of an imaging system according to the first embodiment of the present invention;
Fig.3 is a flowchart of the imaging system according to the first embodiment of the present invention;
Fig.4 is the output image with the simple double exposure control according to the first embodiment of the present invention;
Fig.5A is the divided image of the ODD field and Fig.5B is the divided image of the EVEN field according to the first embodiment of the present invention;
Fig.6A is the extended image of the ODD field and Fig.6B is the extended image of the EVEN field according to the first embodiment of the present invention;
Fig.7A is the adjusted image of the ODD field and Fig.7B is the adjusted image of the EVEN field according to the first embodiment of the present invention;
Fig.8 is the averaged composite image according to the first embodiment of the present invention;
Fig.9 is a block diagram of the imaging means and the image processing unit of an imaging system according to the second embodiment of the present invention;
Fig.10 is a timing chart of the process of the imaging system according to the second embodiment of the present invention;
Fig.11 is an explanatory view of an example of the CCD area according to the second embodiment of the present invention;
Fig.12 is a flowchart of the imaging system according to the second embodiment of the present invention;
Fig.13 is a flowchart of the switching of the shutter speed of the integral mean value detection method according to the second embodiment of the present invention;
Fig. 14 is a flowchart of the switching of the shutter speed of the peak value detection method according to the second embodiment of the present invention;
Fig.15A is the divided image of the ODD field and Fig.15B is the divided image of the EVEN field according to the second embodiment of the present invention;
Fig.16 is a block diagram according to the related art;
Fig. 17 is the output diagram of the field pulse according to the related art;
Fig.18 is the output image with a regular shutter speed according to the related art;
Fig. 19 is the output image with a high shutter speed according to the related art;
Fig.20 is the output image representing the blooming (halation) effect;
Fig.21 is a block diagram according to another related art;
Fig.22 is the image formation diagram according to another related art;

### DETAILED DESCRIPTION

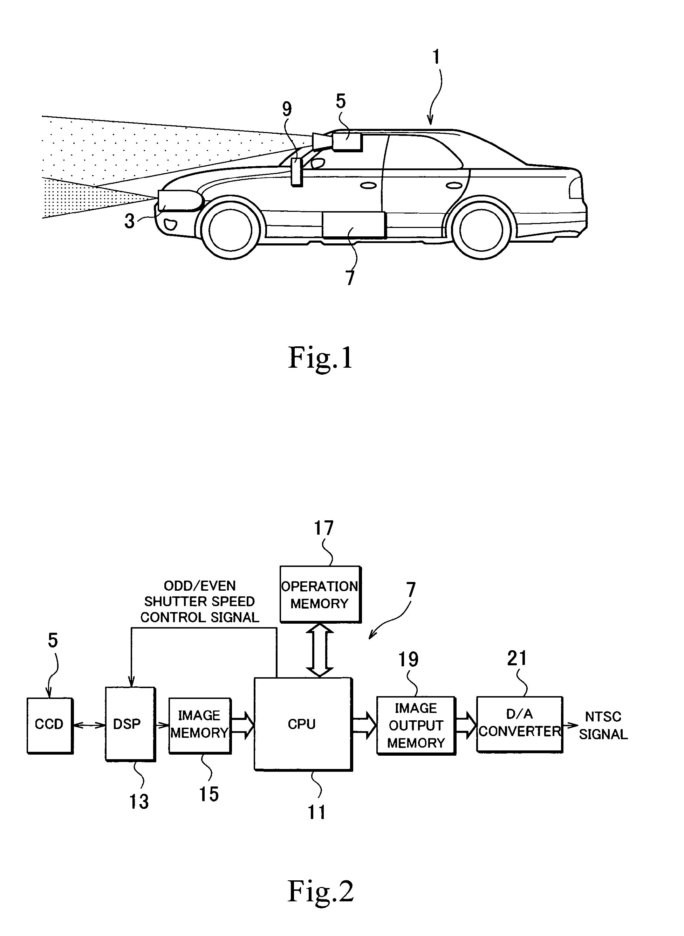

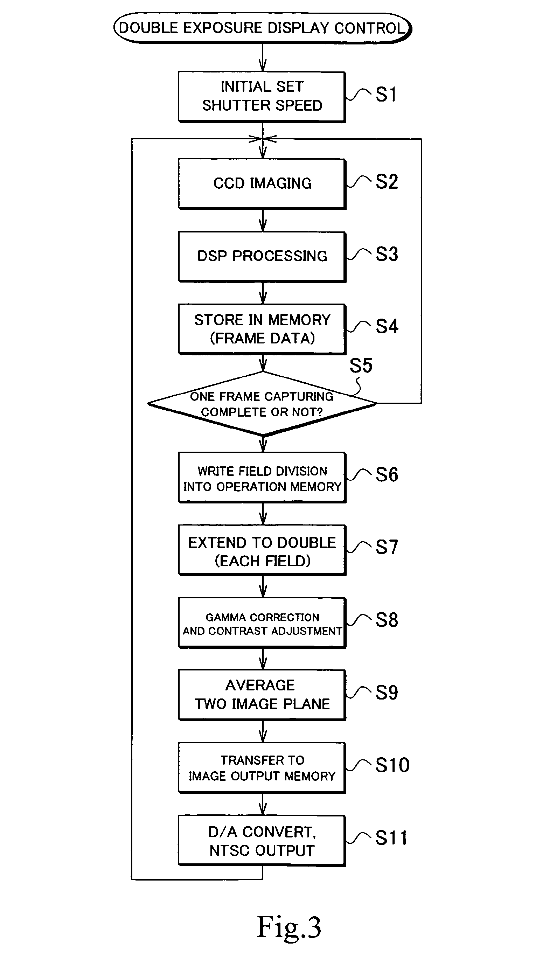

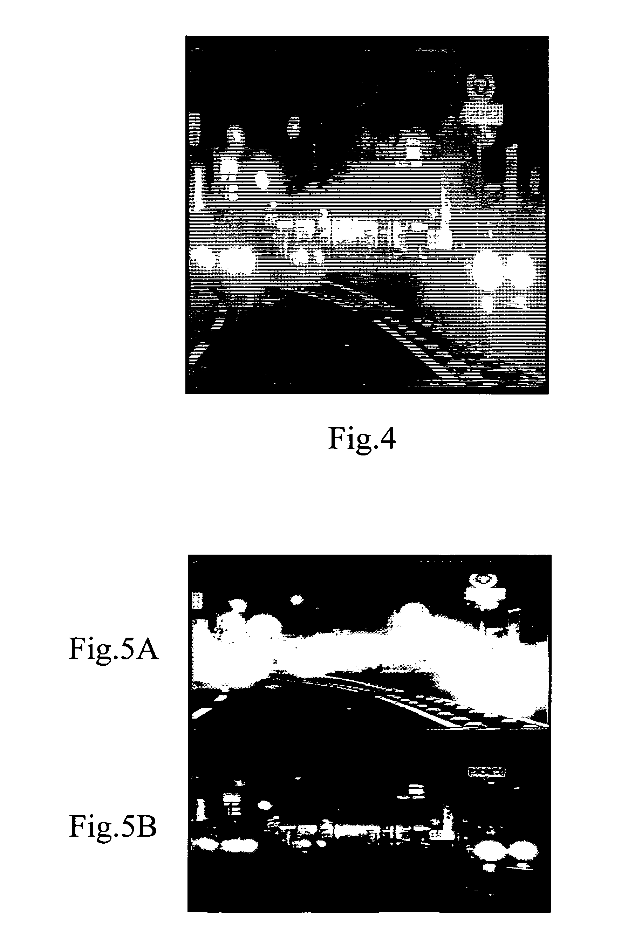

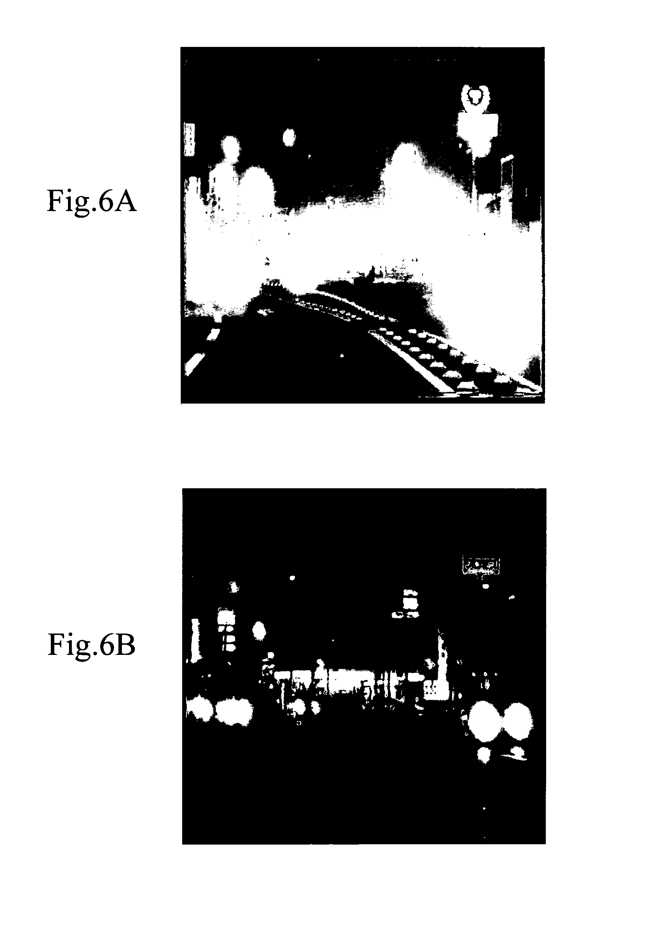

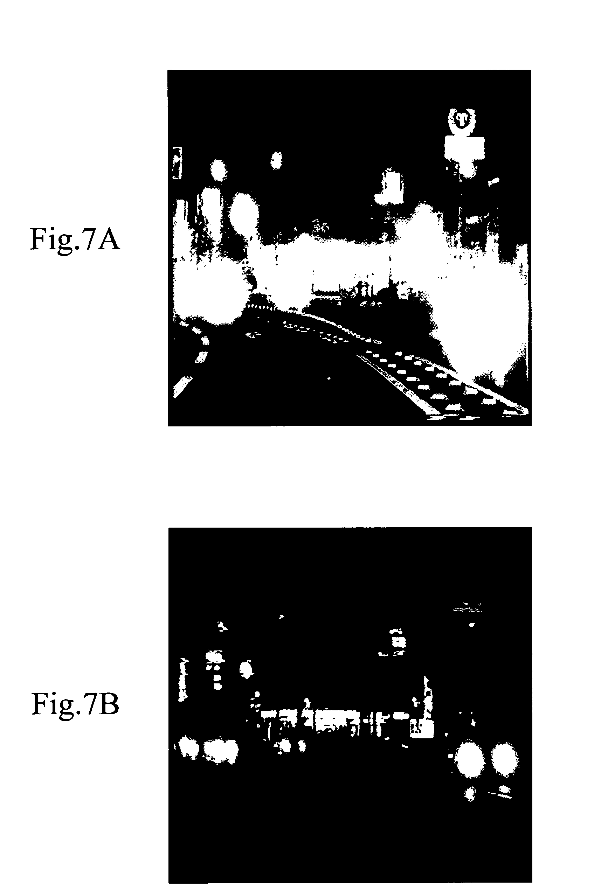

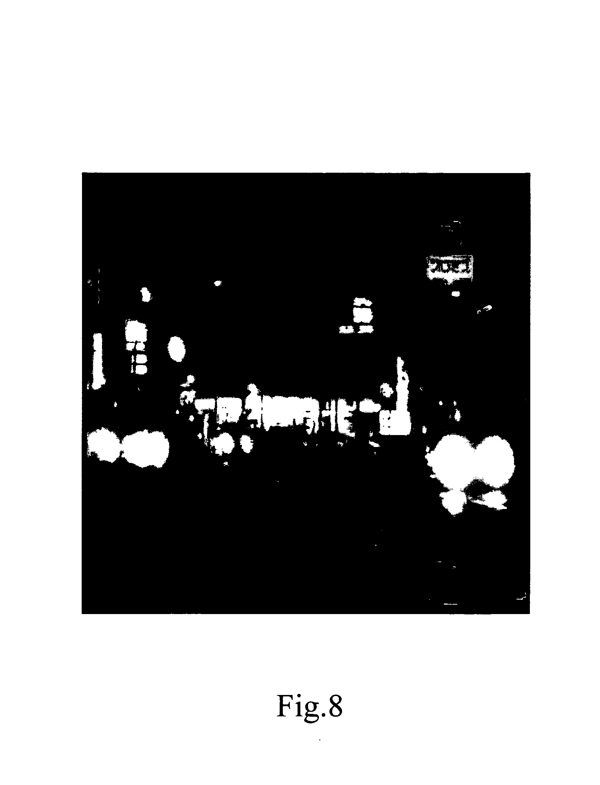

Figs.1 to 8 show an imaging system according to the first embodiment, in which Fig.1 is a conceptual diagram of the automobile, Fig.2 is a block diagram of the imaging system, Fig.3 is a flowchart of the imaging system, Fig.4 is the output image with the simple double exposure, Fig.5A is the divided image of the ODD field and Fig.5B is the divided image of the EVEN field, Fig.6A is the extended image of the ODD field and Fig.6B is the extended image of the EVEN field, Fig.7A is the adjusted image of the ODD field and Fig.7B is the adjusted image of the EVEN field and Fig.8 is the averaged composite image.

The imaging system according to the first embodiment of the present invention is applied to an automobile as Fig.1. An automobile 1 is provided with an IR lamp 3 serving as the infrared light irradiating means, a CCD camera 5 serving as the imaging means, an image processing unit 7 serving as the image processor and also a head up display 9.

The IR lamp 3 radiates an infrared light forward in the running direction of the automobile 1 to enable to image in the dark place at night. The CCD camera 5 images forward position in the running direction of the automobile 1 irradiated the infrared light and converts the images into an electrical signal. The electrical signal convert is performed by a photo diode of a sensitizing unit in the CCD camera 5. The image processing unit 7 changes the signal storage time duration of the CCD camera 5 at the predetermined period and sequentially and periodically outputs images with the different light exposure.

The signal storage time duration is signal storage time duration for each pixel. The change of the signal storage time duration at the predetermined period is explained in concrete terms that the number of times of pulse to discharge the unnecessary charge stored in each pixel is changed so that the time for storing is charged, what is called an electronic shutter operation. The sequential and periodic output of images with the different light exposure is explained in concrete terms that the shutter speed is set for each of the ODD field and the EVEN field by the electronic shutter operation, and each field image read by each shutter speed is sequentially and alternately outputted per 1/60 second.

For the high shutter speed, the dark part badly photographed but the bright part can be sharply photographed. Alternatively, for the low shutter speed, the bright part is saturated and disappeared and the dark part is sharply photographed. The image processing unit 7 extends the images with the different light exposure in the longitudinal direction and averages the signal level of both images after extending to form a composite image.

According to the embodiment, the extension of the images with the different light exposure in the longitudinal direction is explained in concrete terms that the divided image of the ODD field and the divided image of the EVEN field as the images with the different light exposure obtained by changing the shutter speed are extended to double in the longitudinal direction, respectively. The forming of a composite image by averaging the signal level of both images after extending is explained in concrete terms that the signal levels of pixels corresponding to each other between the extended images are averaged to form and output one image.

The image processing unit 7 comprises a CPU 11, a DSP 13, an image memory 15, an operation memory 17, image output memory 19, and D/A converter 21 as Fig.2.

The CPU 11 performs various operations and has the configuration as well as Fig.16 thereby to control the shutter speed for each of the ODD field and the EVEN field. That is to say, a shutter speed control signal is inputted from the CPU 11 to the DSP 13.

The DSP 13 converts the signal from the CCD to a digital signal and processes it. The image memory 15 captures the image data for one frame outputted from the DSP 13.

The CPU 11 divides the frame image data captured in the image memory 15 into each of the ODD field and the EVEN field and writes into the operation memory 17. The CPU 11 extends each field image written into the operation memory 17 to double in the longitudinal direction and adjusts each extended image with such as a gamma correction and a contrast adjustment. The two image data are averaged to form a composite image. The composite image data by averaging is transferred to the image output memory 19 and converted by the D/A converter 21 to output as NTSC signal, for example.

Fig.3 is a flowchart of the imaging system according to the first embodiment. The imaging system substantially employs the double exposure control. First, "Initial set shutter speed" of step S 1 is performed according to the flowchart of Fig.3. In the step S1, an electronic shutter for the ODD field is set to the low shutter speed and an electronic shutter for the EVEN field is set to the high shutter speed as described above for example.

According to the embodiment, the shutter speed for the ODD field is set to 1/60 second and the shutter speed for the EVEN field is set to 1/1000 second, and advance to a step S2. Incidentally, each shutter speed may be changed. The electronic shutter of the ODD field may be set to the high shutter speed and also the electronic shutter of the EVEN field may be set to the low shutter speed.

In the step S2, "CCD imaging" is performed. Where, a shutter speed control signal for the ODD field and a shutter speed control signal for the EVEN field set in the step S1 are outputted from the CPU 11 to the DSP 13.

Then, an imaging is performed by the CCD camera 5 according to a drive signal, and the charges of all pixels of the photodiodes of the sensitizing unit in the CCD camera 5 are converted into the signals. In the ODD field, the signal charges of the odd number of pixels, i.e. every other pixels in the vertical direction among all pixels of the photodiodes of the sensitizing unit are read at 1/60 second, alternatively, in the EVEN field, the signal charges of the even number of pixels are read at 1/1000 second of the storage time, and advance to a step S3.

In the step S3, "DSP processing" is performed. Where, the signal charges read in the CCD camera 5 are captured by DSP 13, and the charge signals are converted to the digital signals by the A/D converter of DSP 13, processed and outputted the digital signals, and advance to a step S4.

In the step S4, "Store in memory" is performed. Where, the processed signals outputted from the DSP 13 are stored in the image memory 15 and advance to a step S5.

In the step S5, "Complete to capture one frame or not" is performed. Where, it is determined whether the processed signals outputted from the DSP 13 are captured in the memory 15 for one frame or not, and if it is not captured, turn back to the step S2 and subsequently the step S3, step S4 step and S5 are repeated. When it is determined that the processed signals for one frame has been captured in the step S5, advance to a step S6.

In the step S6, "Write into field division operation memory" is performed. Where, the frame image data captured in the image memory 15 by the CPU 11 is divided for each of the ODD field and the EVEN field, written the divided image data into the operation memory 17, and then advance to a step S17. Since the divided image data for each of the ODD field and the EVEN field written into the operation memory 17 are concourses of every other data in the longitudinal direction, these are compressed into one-half in the longitudinal direction respect to the frame image data.

In the step S7, "Double extension" is performed. Where, the divided image data of the ODD field and the EVEN field written into the operation memory 17 are extended to double in the longitudinal direction. Where, as a method for extending the image, there is the following method: each pixel for each field is extended to two pixel in the vertical direction; or the signal level of upper and lower two pixels adjacent to each other are averaged and the average value is inserted between the upper and lower two pixels.

In a step S8, "Gamma correction and contrast adjustment" is performed. Where, each extended image plane in the step S7 is adjusted with the gamma correction and the contrast adjustment, and advance to a step S9.

In the step S9, "Average two image plane" is performed to average the two image data of the ODD field and the EVEN field extended to double in the vertical direction. Where, the signal level of pixel corresponding to each other between the extended image data of the ODD field and the EVEN field is averaged with the simple averaging to synthesize and form a new image for one frame. Thereby the image by synthesizing the image data for each field extended to double is formed, and advance to a step S10.

In the step S10, "Transfer to image output memory". Where, the synthesized image data is transferred to an image output memory 19, and advance to the step S11. All of the above described processes are not performed in the time-sharing. For example, the output memory constantly outputs while the signals are captured in the image memory. Additionally while the image processing for the data captured in the image memory is performed, image signals for the next frame are continuously captured.

In a step S11, "D/A conversion and NTSC output" is performed. Where, the digital signals of the image data are converted to analog signals through the D/A converter 21 and outputted as NTSC signals, for example.

Thus the signals outputted from the image processing unit 7 are outputted to the head up display 9 of Fig.1. The head up display 9 displays an image on the front window glass, and the driver of the automobile 1 looks the image so that the situation ahead of the automobile can be precisely understood in the dark place at night.

That is to say, according to the flowchart of Fig.3, the image data processing as Figs.4 to 7 are performed thereby the image as Fig.8 can be displayed through the head up display 9.

Fig.4 is the image data for one frame captured in the image memory 15 with the double exposure control according to the steps S1 to S5. The image data of Fig.4 is divided into the image data for the ODD field of Fig.5A and the image data for the EVEN field of Fig.5B by the field division operation of the step S6. In the ODD field with the low shutter speed, the bright part is saturated and disappeared and the dark part is sharply photographed. Alternatively in the EVEN field with the high shutter speed, the dark part is badly photographed and the bright part is sharply photographed.

The divided image data of Fig.5 is extended to double as the step S7 so that the ODD field extension image of Fig 6(a) and the EVEN field extension image of Fig 6(b) are obtained. Each extension image is subjected to the gamma correction and the contrast adjustment of the step S8 so that the image adjustment data for the ODD field of Fig.7 (a) and the image adjustment data for the EVEN field of Fig.7 (b) are obtained.

Then, the signal level of both of the extended images is averaged according to "Average two image plane" of the step S9 as described above to form a composite image and output the image as Fig.8.

The output image of Fig.8 is far sharp image than the output image with the simple double exposure control of Fig.4. Since the blooming (halation) caused by a strong light such as a head lamp of the oncoming car is precisely prevented so that not only the situation around the light source but also the dark part more sharply appears.

That is to say, as described above, since the images with the different light exposure are only sequentially and periodically outputted using the simple double exposure control, a flicker has to be generated in the output image as Fig.4. Meanwhile according to the first embodiment of the present embodiment, the image is divided into each of the ODD field and the EVEN field, the divided images are extended and the signal level of both images are averaged thereby to form a composite image so that an enhanced sharp image as Fig.8 can be outputted.

Additionally, since the output image of the Fig.8 is the composite image formed by averaging the signal level, an enhanced sharp image such that the boundary and the flicker in the image are eliminated can be outputted as compared to the image which is formed by partially synthesizing the images with the different light exposure.

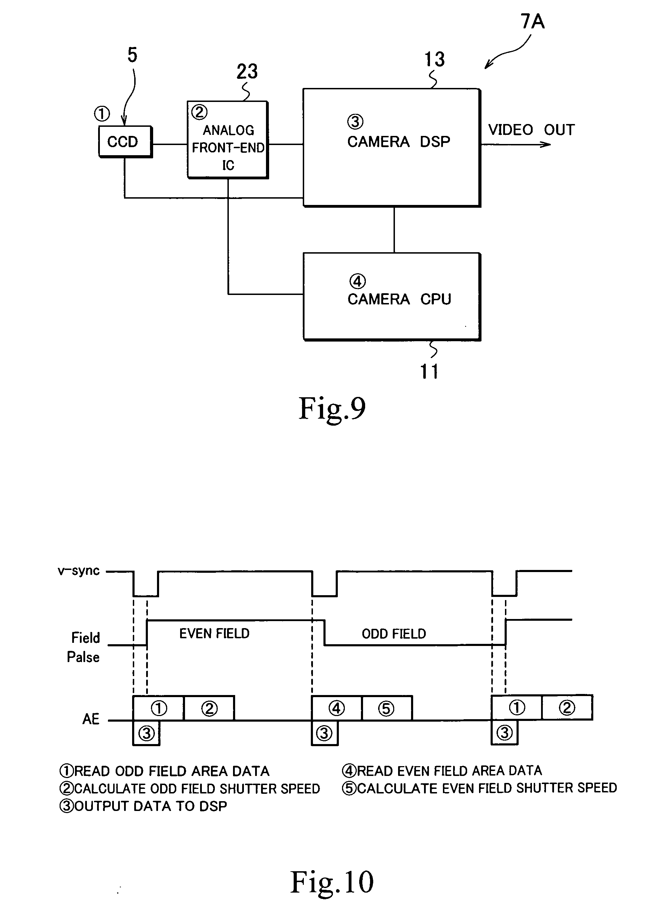

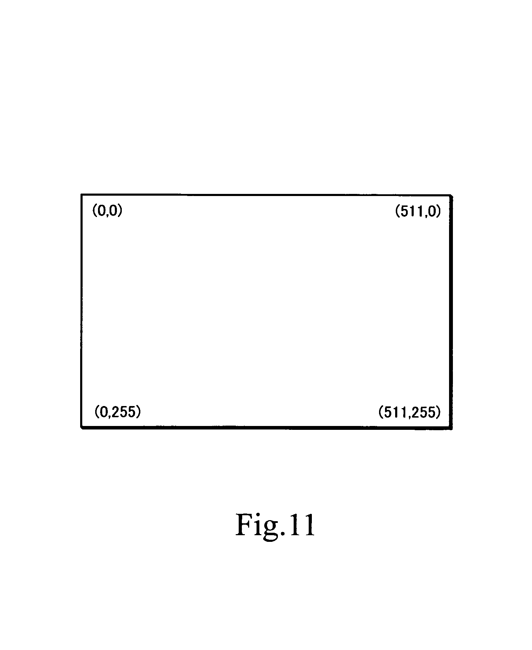

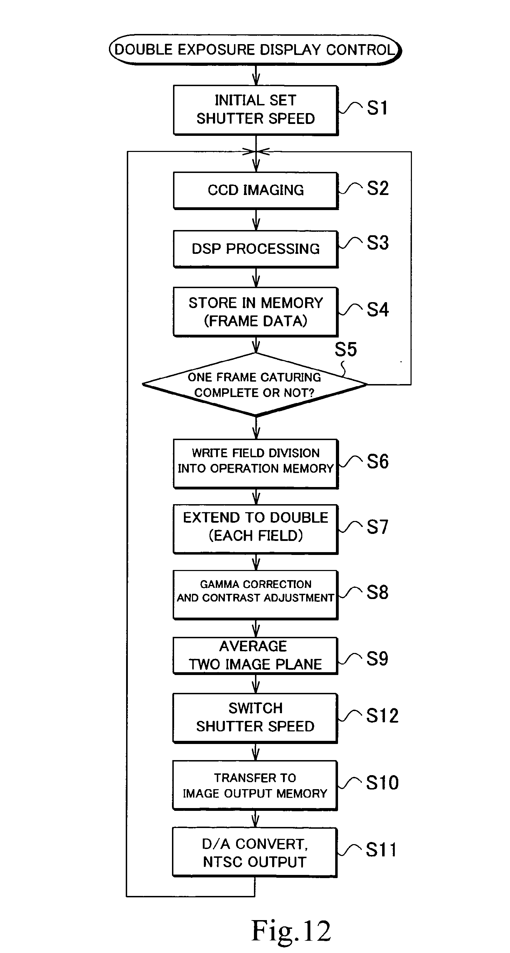

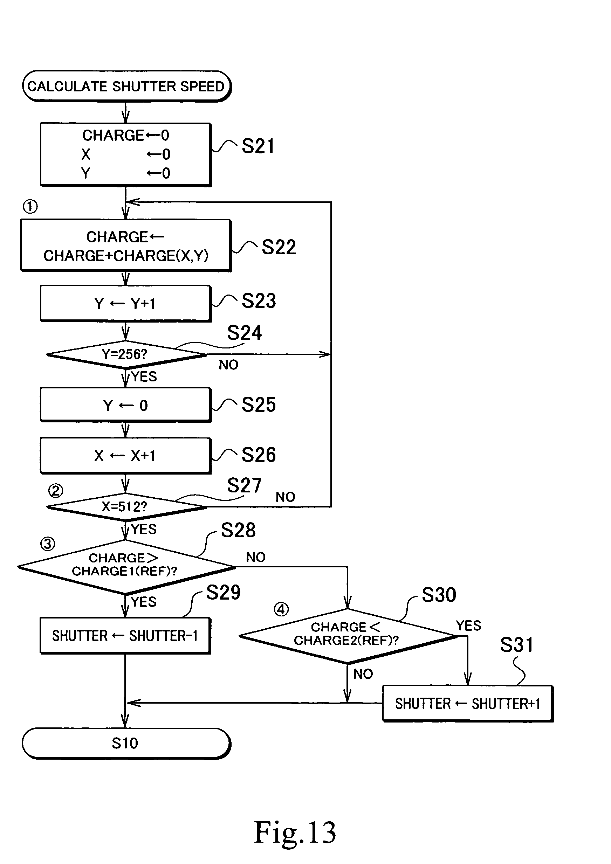

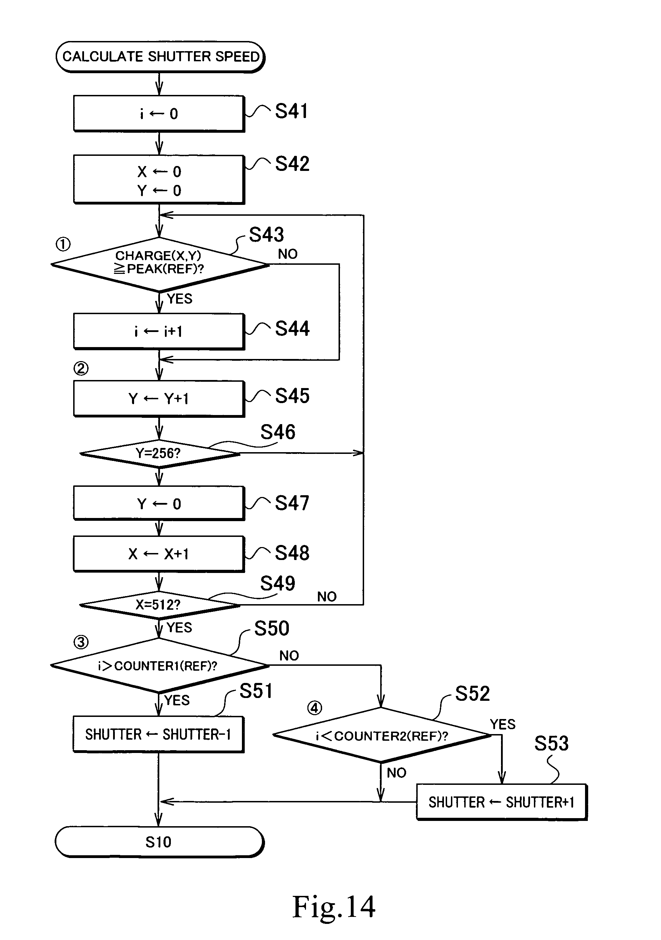

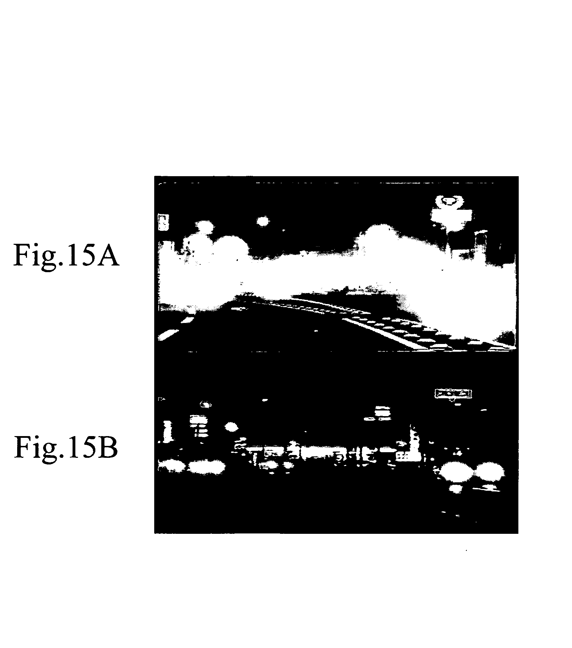

Figs.9 to15 show a imaging system according to the second embodiment of the present invention, in which Fig.9 is a block diagram of the imaging system, Fig.10 is a timing chart of the CPU process, Fig.11 is a conceptual diagram representing the dimension of the image data for each field targeted for calculating the shutter speed, Fig.12 is a flowchart according to the second embodiment, Fig.13 is a flowchart of the calculation of the shutter speed using the integral mean value detection method, Fig.14 is a flowchart of the calculation of the shutter speed using the peak value detection method, Fig.15A is the divided image of the ODD field and Fig.15B is the divided image of the EVEN field. Incidentally, in the description of the components corresponding to the first embodiment, the same reference numerals will be used.

As Fig.9, the imaging system according to the present embodiment provided with an analog front-end IC (CDS/AGC/ADC) 23 in addition to the CCD camera 5, DSP 13 and the CPU 11. The analog front-end IC 23 captures the signal charges in the CCD camera 5 and performs A/D converting of the signals after noise rejection and auto gain control. The analog front-end IC 23 is not shown in the block diagram of Fig.2 according to the first embodiment 1, however, it is a circuit generally provided.

According to the present embodiment, an image processing unit 7A changes the signal storage time duration of the CCD camera 5 at the predetermined period, previously sets a desired value of a light exposure and controls the signal storage time duration i.e. shutter speed according to the desired value when the images with the different exposure are sequentially and periodically. The DSP 13 receives the data for all pixels of the CCD camera 5 from the analog front-end IC 23. The CPU 11 controls the shutter speed according to the desired value of the light exposure and feeds back to the DSP 13 and the analog front-end IC 23. Such operation of the CPU 11 is performed for each of the ODD field and the EVEN field.

First, the shutter speed for the ODD field and the EVEN field is initially set by the CPU 11, and the signal charges are read according to the shutter speed as well as the first embodiment. The switching of the shutter speed for the ODD field and the EVEN field is controlled according to the desired value of the light exposure based on the reading of the signal charge. The switching control of the shutter speed performed at the timing as Fig.10, for example. "AE" of Fig. 10 indicates the exposure control of the CCD camera. It is a generic name of such as a lens diaphragm, an electronic shutter speed of the CCD camera and a control of an analog or digital gain and the like. In Fig.10, the electronic shutter speed of the CCD camera is targeted for the consideration.

In Fig.10, the processing timing of the EVEN field and the ODD field is not simultaneous, however both fields perform the same operation. That is to say, the field pulse is switched between the ODD field and the EVEN field by switching a V-sync (vertical synchronizing signal). Generally, when DSP 13 reads the signal charge from the CCD camera 5 through the analog front-end IC 23, the operation such that the charge is integrated for each determined area of the CCD camera 5 (for example the six areas into which the CCD plane is divided) to average is repeatedly performed, or the operation such that the number of pixels having the charge more than the setting value is counted is repeatedly performed. Such operation is continued until each of the ODD field and the EVEN field terminates, and upon terminating, the CPU 11 reads the integral mean value or the peak count value for each area from the DSP 13 (1 and 4 of Fig.10), calculates the shutter speed based on the value (2 and 5 of Fig.10) and outputs the shutter speed to the DSP 13 on the current field before the same field at a next timing (3 of Fig.10).

Subsequently the above described operation is repeated every switching between the ODD field and the EVEN field. Thus the amount of the stored charge in the CCD camera 5 is compared with a desired luminance level as the desired value of the light exposure to determine the shutter speed such that the amount of the stored charge in the CCD camera are converged on the desired luminance level. For the desired luminance level, the optimum parameter is determined based on the examination and the evaluation as an adjustment item. Where, in case of the field with the low shutter speed, the desired luminance level is such a degree that if the strong spot light such as a head lamp of an oncoming car, it is eliminated and white-saturated thereby the dark part sharply appears. Alternatively, in case of the field with the high shutter speed, the desired luminance level is such a degree that the spot light is turned down thereby the surrounding image of the spot light easily views.

As a method of determining the shutter speed, there is following method: the integral mean value detection method is used for both of the EVEN field and the ODD field; the peak value detection method is used for both of the EVEN field and the ODD field; the integral mean value detection method is used for the EVEN field and the peak value detection method is used for the ODD field; or the integral mean value detection method is used for the ODD field and the peak value detection method is used for the EVEN field. In the integral mean detection method, the image data is scanned to compare all of the accumulated values of the luminance value for each pixel with the reference value so that the shutter speed is switched. In the peak value detection method, the image data is scanned and if the luminance value of each pixel is equal to or more than the peak charge reference value, the pixels are counted to compare the number of pixels with the number of reference pixels so that the shutter speed is switched.

In the present embodiment, one example of the dimension of the image to be scanned to determine the shutter speed is determined. It is set to, for example, 512 pixels×256 lines as Fig.11 according to the divided image data of Fig.5 because each field is every other data in the longitudinal direction.

Fig.12 is a flowchart according to the second embodiment. The flowchart of Fig.12 is expressed by mixing three different calculations which are an accumulated charge average value calculation and a peak count value calculation performed by the DSP 13, and a next field shutter speed calculation based on the calculation results read from the DSP 13 performed by a microcomputer in order to be easy to understand the flow of the shutter speed calculation. The flowchart of Fig.12 is basically same as the flowchart of Fig.3 of the first embodiment, and the same step number is used for each corresponding step.

Additionally, according to the flowchart of Fig.12, a step S12 is inserted between the step S9 and the step S10, and the shutter speed initially set at the step S1 is switched at the step S12.

In case of the shutter speed switching by the integral mean value detection method, shifting from the step S9 to the step S12 in Fig.12, the flowchart of Fig. 13 is started. In a step S21 of a Fig.13, the resetting is performed such that a accumulated charge value (CHARGE) is reset to 0, a coordinate value X of pixels in the horizontal direction is reset to 0 and a coordinate value Y of pixels in the longitudinal direction is reset to 0, respectively and advance to a step S22.

In the step S22, the accumulated charge value (CHARGE) is calculated.

In a step S23, Y value is counted one step by one step (Y=Y+1).

In a step S24, it is determined whether the Y value is reached 256 line or not, and the step S22, the step S23 and the step S24 are repeated until Y is 256. Thus when the charge is accumulated from Y=0 to Y=255 while X=0, Y=0 in a step S25 and X value is counted by one step (X=X+1) in a step S26.

In a step S27, it is determined whether X value completes 511 pixels and if the X value does not reach 512 pixels, the step S22, the step S23, the step S24, the step S25, the step S26 and the step S27 are repeated to be performed the charge accumulation.

After the charge accumulated value for all pixels in the 512 pixels and 256 lines is performed in the steps S22 to S27, advance to a step S28.

In the step S28, if the charge accumulated value is more than a reference value 1 (CHARGE 1 (REF)) is (YES) and advance to a step S29 thereby a shutter speed (SUTTER) is set to the high speed by one step (SHUTTER-1).

In the step S28, if the charge accumulated value is less than the reference value 1, advance to a step S30 and it is determined whether the charge accumulated value is less than a reference value 2 (CHARGE 2(REF)) or not. If the accumulated value is less than the reference value 2 (CHARGE 2(REF)), i.e. (YES), advance to a step S31, otherwise, i.e. (NO), shift to the step S10.

Where for the reference value 1 and 2, the optimum parameter is determined to maintain the desired luminance level of each field based on the previous examination and evaluation.

In the step 31, the shutter speed (SHUTTER) is set to the low speed by one step (SHUTTER+1).

Where if the range of shutter speed is set to 1/60 to 1/1000 second, 1/60 second, 1/100 second, 1/250 second and 1/500 second are used for ODD field, and 1/1000 second, 1/2000 second, 1/4000 second and 1/10000 second are used for EVEN field for example. Where, the shutter speed being higher than 1/60 second by one step is 1/100 second. The shutter speed being lower than 1/4000 second by one step is 1/2000 second.

Incidentally, the above described shutter speeds are examples only. The range of the shutter speed for each field may be extended or the distance between each shutter speed may be narrowed freely.

Thus, in case of the charge accumulated value is more than the reference value 1, since more than a certain amount of the strong light such as a head lamp of an oncoming car exists and the whole luminance level becomes high, it is intended to decrease the luminance level by accelerating the shutter speed. Additionally, in case of the charge accumulated value is less than the reference value 2, since the whole luminance level is low, it is intended to raise the luminance level by slowing down the shutter speed. In this case, the luminance level of the reference 1 is set to higher than that of the reference 2. In case of the charge accumulated value is within the reference value 1 and reference value 2, the shutter speed is not changed.

Incidentally, it is not distinguished between the EVEN field and the ODD field in Fig.13. However since each shutter seed for the EVEN field and the ODD field is changed according to the initial setting of the shutter speed in the step S1, the reference value 1 and 2 for each field are different corresponding to the initial setting so that each shutter speed is switched according to the flowchart of Fig.13.

In case of the shutter speed switching is performed by the peak value detection method, shifting from the step S9 to the step S12 in Fig 12, the flowchart of Fig. 14 is started.

In a step S41 of Fig.14, a resetting process, i.e. "i=0" process is performed. Where, a peak counter (i) is reset to 0. As described above, the peak counter scans the image data and if the luminance value of each pixel is equal to or more than the peak charge reference value, counts the pixels.

In a step S42, the coordinate value X of pixels in the horizontal direction is reset to 0, and the coordinate value Y of pixels in the longitudinal direction is reset to 0, and advance to a step S43.

In the step 43, it is determined whether the charge accumulated value (CHARGE) of the pixel positioned at coordinates (X, Y) is equal to or more than a preset peak charge reference value (PEAK (REF)) or not. If the accumulated value of the pixel positioned at coordinates (X, Y) is equal to or more than a peak charge reference value, shift to a step S44, otherwise, shift to a step S45.

In the step S44, the peak counter is counted by one step. (i=i+1).

In the step S45, Y value is counted one step by one step. (Y=Y+1).

In a step S46, it is determined whether Y value reaches 256 line or not and the step S43, the step S44, the step S45 and the step S46 are repeated until Y is 256. Thus Y is scanned from 0 to 255 while X is 0 so that Y value becomes 0 in a step S47, and X value is counted by one step in a step S48 (X=X+1).

In a step S49, it is determined whether X value completes 511 pixels or not. If X value does not reach 512 pixel, the step S43, the step S44, the step S45, the step S46, the step S47, the step S48 and the step S49 are repeated and pixels being equal to or more than the peak charge reference value are counted.

After scanning all pixels in 512 pixels × 256 lines in the steps S43 to S49, shift to a step S50.

In the step S50, if the number of the peak charge pixels is more than the number of the peak charge reference pixel 1 (COUNTER 1 (REF)) i.e. (YES), shift to a step S51 and the shutter speed (SHUTTER) is set to the high speed by one step (SHUTTER-1).

In the step S50, if the number of the peak charge pixels is less than the number of the peak charge reference pixels 1, shift to a step S52 and it is determine whether the number of the peak charge pixels is less than the number of the peak charge reference pixels 2 (COUNTER 2 (REF)), or not. If the number of the peak charge pixels is less than the number of the peak charge reference pixels 2 (COUNTER 2 (REF)), i.e. (YES), shift to a step S53, otherwise, i.e. (NO), shift to the step S10.

Where for the number of the peak charge reference pixel 1 and 2, the optimum parameter is determined to maintain the desired luminance level for each field based on the previous examination and evaluation as described above.

In the step 53, the shutter speed (SUTTER) is set to the low speed by one step (SUTTER+1).

Thus, in case of the number of peak charge pixels is more than the number of peak charge reference pixels 1, since more than a certain amount of the strong light such as a head lamp of an oncoming car exists and the whole luminance level becomes high, it is intended to decrease the luminance level by accelerating the shutter speed. Additionally, in case of the number of peak charge pixels is less than the number of peak charge reference pixels 2, since the whole luminance level is dark, it is intended to raise the luminance level by slowing down the shutter speed. In this case, the luminance level of the number of peak charge reference pixels 1 is set to more than that of the number of peak charge reference pixels 2. In case of the number of peak charge pixels is within the number of peak charge reference pixels 1- 2, the shutter speed is not changed.

Incidentally, it is not also distinguished between the EVEN field and the ODD field in Fig.14. However since each shutter seed for the EVEN field and the ODD field is changed according the initial setting of the shutter speed in the step S1, the number of peak charge reference pixels 1 and 2 for each field are different corresponding to the initial setting so that each shutter speed is switched according to the flowchart of Fig.14.

Accordingly, in the present embodiment, the shutter speed initially set in the step S1 is appropriately switched in the step S12 so that the divided image data for each field as Fig.15 can be obtained.

Fig.15 corresponds Fig.5, in which 15A shows an ODD field and 15B shows an EVEN field for example. As evident by comparing with Fig.5, if the strong spot light such as a head lamp of an oncoming car is imaged, it is eliminated and white-saturated thereby the dark part sharply appears in the ODD field set to bright. Alternatively, the spot light is more turned down thereby the surrounding image of the spot light easily views in the EVEN field (Fig. 15B). Therefore, the totally enhanced sharp image can be obtained.

Thus the processes as Fig.6, Fig.7 and Fig.8 of the first embodiment are performed using such image of Fig.15 so that the enhanced sharp output image can be obtained.

In the present embodiment, the integral mean value detection method or the peak value detection method is employed for both of the ODD field and the EVEN field, respectively, however, the integral mean value detection method may be employed for the EVEN field and the peak value detection method may be employed for the ODD field, or the peak value detection method may be employed for the EVEN field and the integral mean value detection method may be employed for the ODD field. Thereby the optimum shutter speed can be obtained. Where, in the integral mean value detection method, the reference value is set to such that the brightness of the whole image plane is 50% gray. Alternatively, in the peak value detection method, the number of reference pixels is set to such that the maximum light intensity part in the image plane is 100% white. Thereby in the ODD field set to bright, the dark part is sharper image, alternatively in the EVEN field set to dark, the spot light is turned down thereby the surrounding image of the spot light easily views.

Incidentally, in the ODD field and the EVEN field, the charge reading is not limited to read per pixel and an aggregation of a plurality pixels may be read depending on the DPS 13 which processes the charge for each pixel.

In the above described embodiment, the output image is displayed by the head up display 9, however, it may be displayed by a display provided in such as the inside of car. Additionally, in the above described embodiment, the IR lamp 3 irradiates forward in the running direction of the automobile, however it may irradiates such as backward or lateral direction.

The imaging system may be applied to not only the automobile, but also other vehicles such as a two motorcycle and a ship or it may be an individual imaging system from such vehicles.

### INDUSTRIAL APPLICABILITY

As thus described above, the imaging system according to the present invention radiates the infrared light forward, takes an image with such as an in-vehicle CCD camera during the automobile is driven at night and conforms the image so that the situation ahead of the automobile can be precisely appreciated.

## Claims

1. An imaging system comprising:
infrared light irradiating means for irradiating an infrared light;
an imaging means for imaging the position irradiated the infrared light by the infrared light irradiating means and converting to an electrical signal; and
an image processor for changing the signal storage time duration of the imaging means at a predetermined period and sequentially and periodically outputting images with a different light exposure, wherein
the image processor extends the images with the different light exposure in the longitudinal direction and averages the signal level of both images after extending so that a composite image is formed.

2. The imaging system of claim 1, wherein:
the image processor performs the extension of the images by inserting an average value of the signal level of adjacent pixels in the longitudinal direction into therebetween.

3. The imaging system of claim 1 or 2, wherein:
the image processor previously sets a desired value of the light exposure and controls the signal storage time duration according to the desired value.

4. The imaging system of claim 3, wherein:
the imaging processor accumulates electrical signals of the imaging means and compares the accumulated electrical signals with a preset reference value according to the desired value to control the signal storage time duration.

5. The imaging system of claim 3, wherein:
the image processor compares the number of pixels having the electrical signal more than the reference value in the imaging means with the number of preset reference pixels according to the desired value to control the signal storage time duration.

6. The imaging system of any of claims 1 to 5, wherein:
the infrared light irradiating means, the imaging means and the image processing units are provided in an automobile;
the infrared light irradiating means radiates the infrared light outside the automobile and the imaging means images the outside of the automobile.
